# EUROPEAN PATENT APPLICATION

(11) **EP 4 750 130 A2**
(43) Date of publication of application: **27.05.2026**
(21) Application number: 26170057.9
(22) Date of filing: 12.04.2024
(51) Int. Cl.: H04W 24/02

(54) **SYSTEM AND METHOD FOR SUPPORTING A 4G COMBO CELL**

(30) Priority: 29.04.2023 IN 202321030872
(62) Divisional of application: 24800002.8
(71) Applicant: Jio Platforms Limited, Ahmedabad, Gujarat 380006 (IN)
(72) Inventor: BHATNAGAR, Pradeep Kumar, Navi Mumbai (IN); BHATNAGAR, Aayush, Navi Mumbai (IN); BANSAL, Amrish, Navi Mumbai (IN); GUPTA, Sumit, Navi Mumbai (IN)
(74) Representative: Dehns

(57) **Abstract**

A system and a method for bandwidth allocation for an access point in a 4G combo indoor small cell (IDSC) in a network is disclosed. The 4G combo IDSC comprises an access point and a 4G IDSC. Throughputs of a 5G IDSC and a backhaul switch connected to the 5G IDSC are determined. A remaining bandwidth for the 4G combo IDSC is determined based on the determined throughput of the 5G IDSC and the backhaul switch. A throughput of a 4G IDSC is determined. A precision time protocol (PTP) bandwidth associated with a PTP grandmaster attached to the network is determined. A bandwidth of the access point in the 4G combo IDSC is determined based on the remaining bandwidth, the throughput of the 4G IDSC and the PTP bandwidth. The calculated bandwidth is allocated to the access point in the 4G combo IDSC.

## Description

### RESERVATION OF RIGHTS

A portion of the disclosure of this patent document contains material, which is subject to intellectual property rights such as, but are not limited to, copyright, design, trademark, Integrated Circuit (IC) layout design, and/or trade dress protection, belonging to Jio Platforms Limited (JPL) or its affiliates (hereinafter referred as owner). The owner has no objection to the facsimile reproduction by anyone of the patent document or the patent disclosure, as it appears in the Patent and Trademark Office patent files or records, but otherwise reserves all rights whatsoever. All rights to such intellectual property are fully reserved by the owner.

### FIELD OF DISCLOSURE

The embodiments of the present disclosure generally relate to communication technology. The present disclosure relates to network optimization by supporting a fourth generation (4G) combo cell. In particular, the present disclosure relates to system and method for bandwidth allocation for an access point in the 4G combo indoor small cell (IDSC) in a network.

### BACKGROUND OF DISCLOSURE

The following description of related art is intended to provide background information pertaining to the field of the disclosure. This section may include certain aspects of the art that may be related to various features of the present disclosure. However, it should be appreciated that this section be used only to enhance the understanding of the reader with respect to the present disclosure, and not as admissions of prior art.

Currently, fourth generation (4G) combo indoor small cell (IDSC) (4G access radio and Wi-Fi access radio) is deployed in mass level, and to upgrade it to 5G, may require a change in the whole infrastructure. In effect, the existing 4G combo IDSC may have to be removed and replaced with new IDSC, which may support both 5G, and 4G and Wireless-Fidelity (Wi-Fi) radio.

The backhaul configuration and changes in the infrastructure may require massive cost and high time. There is, therefore, a need in the art to provide a method and a system that can capitalize on the existing infrastructure and overcome the shortcomings of the existing prior arts.

### OBJECTS OF THE PRESENT DISCLOSURE

Some of the objects of the present disclosure, which at least one embodiment herein satisfies are as listed herein below.

An object of the present disclosure is to provide daisy chain support for fourth generation (4G) and wireless-fidelity (Wi-Fi) combo cell through 5G indoor small cell (IDSC).

An object of the present disclosure is to facilitate dynamic bandwidth allocation between 5G, and daisy chain connected Wi-Fi.

An object of the present disclosure is to support prioritization of precision time protocol (PTP) traffic from 4G to 5G, and vice versa.

An object of the present disclosure is to use existing infrastructure of 4G and Wi-Fi for both 4G and Wi-Fi, and 5G by minimizing backhaul configuration changes, and without any additional cost and time for indoor 5G rollout.

An object of the present disclosure is to enhance network and cost optimization.

### SUMMARY

In an exemplary embodiment, the present invention discloses a method for bandwidth allocation for an access point in a 4G combo indoor small cell (IDSC) in a network. The method comprising determining a throughput of a backhaul switch connected to a 5G indoor small cell (IDSC). The method comprising determining a throughput of the 5G IDSC. The method comprising determining a remaining bandwidth for the 4G combo IDSC based on the determined throughput of the backhaul switch and the determined throughput of the 5G IDSC. The method comprising determining a throughput of a 4G IDSC. The 4G combo IDSC comprising the access point and the 4G IDSC. The method comprising determining a precision time protocol (PTP) bandwidth associated with a PTP grandmaster attached to the network. The method comprising calculating a bandwidth for the access point in the 4G combo IDSC based on the determined remaining bandwidth, the determined throughput of the 4G IDSC and the determined PTP bandwidth. The method comprising allocating the calculated bandwidth to the access point in the 4G combo IDSC.

In some embodiments, the remaining bandwidth for the 4G combo IDSC is a difference between the determined throughput of the backhaul switch and the determined throughput of the 5G IDSC.

In some embodiments, the calculated bandwidth for the access point in the 4G combo IDSC is a difference between the remaining bandwidth, the determined throughput of the 4G IDSC and the determined PTP bandwidth.

In some embodiments, the backhaul switch is connected to at least one optical port of the 5G IDSC.

In some embodiments, the 5G IDSC includes at least one daisy chain output port. In some embodiments, the at least one daisy chain output port is connected from the 5G IDSC to the 4G combo IDSC.

In an exemplary embodiment, the present invention discloses a system for bandwidth allocation for an access point in a 4G combo indoor small cell (IDSC) in a network. The system is configured to determine a throughput of a backhaul switch connected to a 5G indoor small cell (IDSC). The system is configured to determine a throughput of the 5G IDSC. The system is configured to determine a remaining bandwidth for the 4G combo IDSC based on the determined throughput of the backhaul switch and the determined throughput of the 5G IDSC. The system is configured to determine a throughput of a 4G IDSC. The 4G combo IDSC comprising of the access point and the 4G IDSC. The system is configured to determine a precision time protocol (PTP) bandwidth associated with a PTP grandmaster attached to the network. The system is configured to calculate a bandwidth for the access point in the 4G combo IDSC based on the determined remaining bandwidth, the determined throughput of the 4G IDSC and the determined PTP bandwidth. The system is configured to allocate the calculated bandwidth to the access point in the 4G combo IDSC.

In some embodiments, the remaining bandwidth for the 4G combo IDSC is a difference between the determined throughput of the backhaul switch and the determined throughput of the 5G IDSC.

In some embodiments, the calculated bandwidth for the access point in the 4G combo IDSC is a difference between the remaining bandwidth, the determined throughput of the 4G IDSC and the determined PTP bandwidth.

In some embodiments, the backhaul switch is connected to at least one optical port of the 5G IDSC.

In some embodiments, the 5G IDSC includes at least one daisy chain output port.

In some embodiments, the at least one daisy chain output port is connected from the 5G IDSC to the 4G combo IDSC.

In an exemplary embodiment, the present invention discloses a network comprising a system for bandwidth allocation for an access point in a 4G combo indoor small cell (IDSC). The system is configured to determine a throughput of a backhaul switch connected to a 5G indoor small cell (IDSC). The system is configured to determine a throughput of the 5G IDSC. The system is configured to determine a remaining bandwidth for the 4G combo IDSC based on the determined throughput of the backhaul switch and the determined throughput of the 5G IDSC. The system is configured to determine a throughput of a 4G IDSC. The 4G combo IDSC comprising of the access point and the 4G IDSC. The system is configured to determine a precision time protocol (PTP) bandwidth associated with a PTP grandmaster attached to the network. The system is configured to calculate a bandwidth for the access point in the 4G combo IDSC based on the determined remaining bandwidth, the determined throughput of the 4G IDSC and the determined PTP bandwidth. The system is configured to allocate the calculated bandwidth to the access point in the 4G combo IDSC.

In some embodiments, the remaining bandwidth for the 4G combo IDSC is a difference between the determined throughput of the backhaul switch and the determined throughput of the 5G IDSC.

In some embodiments, the remaining bandwidth for the 4G combo IDSC is a difference between the determined throughput of the backhaul switch and the determined throughput of the 5G IDSC.

In some embodiments, the calculated bandwidth for the access point in the 4G combo IDSC is a difference between the remaining bandwidth, the determined throughput of the 4G IDSC and the determined PTP bandwidth.

In some embodiments, the backhaul switch is connected to at least one optical port of the 5G IDSC.

In some embodiments, the 5G IDSC includes at least one daisy chain output port. In some embodiments, the at least one daisy chain output port is connected from the 5G IDSC to the 4G combo IDSC.

In yet another exemplary embodiment, a computer program product comprising a non-transitory computer-readable medium comprising instructions that, when executed by one or more processors, cause the one or more processors to perform a method for bandwidth allocation for an access point in a 4G combo indoor small cell (IDSC) in a network. The method comprising determining a throughput of a backhaul switch connected to a 5G indoor small cell (IDSC). The method comprising determining a throughput of the 5G IDSC. The method comprising determining a remaining bandwidth for the 4G combo IDSC based on the determined throughput of the backhaul switch and the determined throughput of the 5G IDSC. The method comprising determining a throughput of a 4G IDSC. The 4G combo IDSC comprising the access point and the 4G IDSC. The method comprising determining a precision time protocol (PTP) bandwidth associated with a PTP grandmaster attached to the network. The method comprising calculating a bandwidth for the access point in the 4G combo IDSC based on the determined remaining bandwidth, the determined throughput of the 4G IDSC and the determined PTP bandwidth. The method comprising allocating the calculated bandwidth to the access point in the 4G combo IDSC.

The foregoing general description of the illustrative embodiments and the following detailed description thereof are merely exemplary aspects of the teachings of this disclosure and are not restrictive.

### BRIEF DESCRIPTION OF DRAWINGS

The accompanying drawings, which are incorporated herein, and constitute a part of this disclosure, illustrate exemplary embodiments of the disclosed methods and systems in which like reference numerals refer to the same parts throughout the different drawings. Components in the drawings are not necessarily to scale, emphasis instead being placed upon clearly illustrating the principles of the present disclosure. Some drawings may indicate the components using block diagrams and may not represent the internal circuitry of each component. It will be appreciated by those skilled in the art that disclosure of such drawings includes the disclosure of electrical components, electronic components or circuitry commonly used to implement such components.
FIG. 1 illustrates an exemplary representation for exchanging access media via a fifth generation (5G) indoor small cell (IDSC), in accordance with embodiments of the present disclosure.
FIG. 2 illustrates an exemplary flow chart of a method for bandwidth allocation at the 5G IDSC, in accordance with embodiments of the present disclosure.
FIG. 3 illustrates an exemplary flow chart of a method for bandwidth allocation at the 5G IDSC considering different 5G throughputs, in accordance with embodiments of the present disclosure.
FIG. 4 illustrates an exemplary representation of the 5G new radio (NR) IDSC, in accordance with embodiments of the present disclosure.
FIG. 5 illustrates an exemplary block diagram of the 5G IDSC with 4G combo IDSC, in accordance with embodiments of the present disclosure.
FIG. 6 illustrates an exemplary sequence diagram depicting connectivity data flow, in accordance with embodiments of the present disclosure.
FIG. 7 illustrates an exemplary sequence diagram for supporting daisy chain connectivity to 4G combo IDSC, in accordance with embodiments of the present disclosure.
FIG. 8 illustrates an exemplary sequence diagram depicting precision time protocol (PTP) flow from backhaul to 5G IDSC and from daisy chain port to 4G combo IDSC, in accordance with embodiments of the present disclosure.
FIG. 9 illustrates an exemplary detailed architecture of connectivity data flow, in accordance with embodiments of the present disclosure.
FIG. 10 illustrates an exemplary PTP flow/clock synchronization mechanism, in accordance with embodiments of the present disclosure.
FIG. 11 illustrates an exemplary method for bandwidth allocation for an access point in the 4G combo indoor small cell (IDSC) in the network, in accordance with embodiments of the present disclosure
FIG. 12 illustrates an exemplary computer system in which or with which embodiments of the present disclosure may be implemented.

The foregoing shall be more apparent from the following more detailed description of the disclosure.

### DETAILED DESCRIPTION OF DISCLOSURE

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the disclosure as set forth.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

The word "exemplary" and/or "demonstrative" is used herein to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive in a manner similar to the term "comprising" as an open transition word without precluding any additional or other elements.

Reference throughout this specification to "one embodiment" or "an embodiment" or "an instance" or "one instance" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

The present disclosure relates to a daisy chain support for Fourth Generation (4G) combo small cell in 5G indoor small cell. In particular, the present disclosure relates to a 5G indoor small cell (IDSC) with daisy chain that may support backhaul connectivity of 4G combo IDSC, consisting of 4G radio access network (RAN) and Wireless Fidelity (Wi-Fi) access point. The 5G IDSC has one dedicated Ethernet/optical port to connect with the 4G combo IDSC. In some embodiments, the 5G IDSC may bridge data, control, and precision time protocol (PTP) signals from a backhaul switch, connected to the 5G IDSC Ethernet/optical port, and re-route it to the 4G combo IDSC through the dedicated Ethernet/optical port. It may be noted that the proposed mechanism may be deployed on existing infrastructure of 4G and Wi-Fi to be used for both Wi-Fi and 4G, and 5G, by minimizing backhaul configuration changes, and without any additional cost and time for indoor 5G rollout.

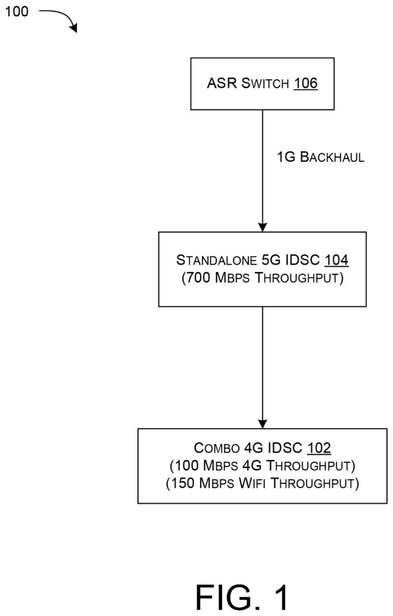

The various embodiments throughout the disclosure will be explained in more detail with reference to FIG. 1 - FIG. 9.

FIG. 1 illustrates an exemplary representation 100 for exchanging access media via a 5G IDSC, in accordance with embodiments of the present disclosure.

The proposed 5G IDSC 104 with daisy chain support for 4G combo IDSC 102 leverages the existing 4G + Wi-Fi indoor deployment infrastructure for fast upgrade to latest 5G technology by connecting the 5G IDSC 104 with existing backhaul and daisy chain port in 5G IDSC 104 providing the backhaul to existing 4G combo IDSC 102. The changes require in backhaul configuration are minimum and with respect to additional configuration for 5G IDSC only. The 4G combo IDSC configuration may remain same at a switch 106. It may be noted that the peak throughput requirements of different access media are as below:
1. 5G IDSC - Peak Downlink throughput requirement - 750 Mbps
2. 4G IDSC - Peak Downlink throughput requirement - 100 Mbps
3. Wi-Fi 5 access point (AP) - Peak Downlink/Uplink throughput requirement - 500 Mbps

In an embodiment, the 5G IDSC 104 may take a decision on run time to provide the adequate bandwidth to all the three-access media.

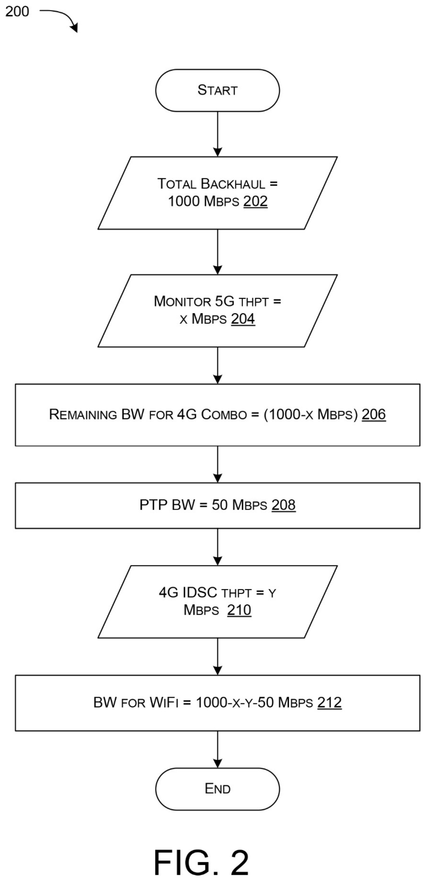

FIG. 2 illustrates an exemplary flow chart 200 of a method for decision making at the 5G IDSC, in accordance with embodiments of the present disclosure. In particular, FIG. 2 depicts how the 5G IDSC manages existing bandwidth and required bandwidth for optimal use cases.

As depicted in FIG. 2, at step 202, the 5G IDSC (e.g., 104) may be connected to a switch (e.g., 106) with 1G (1000 Mbps) backhaul.

At step 204, the 5G throughput may be x Mbps, where x may be an integer.

Therefore, the 5G IDSC 104 may determine, at step 206, that remaining bandwidth for 4G combo IDSC (e.g., 102) is (1000-x) Mbps.

Further, at step 208, the 5G IDSC 104 may determine that PTP bandwidth may be reserved as 50 Mbps.

At step 210, the 4G throughput may be y Mbps, where y may be an integer.

Accordingly, at step 212, the 5G IDSC 104 may determine the bandwidth for Wi-Fi in 4G combo IDSC 102 as 1000-(5G throughput) -(4G throughout) - (PTP bandwidth) in Mbps, i.e. (1000-x-y-50) Mbps.

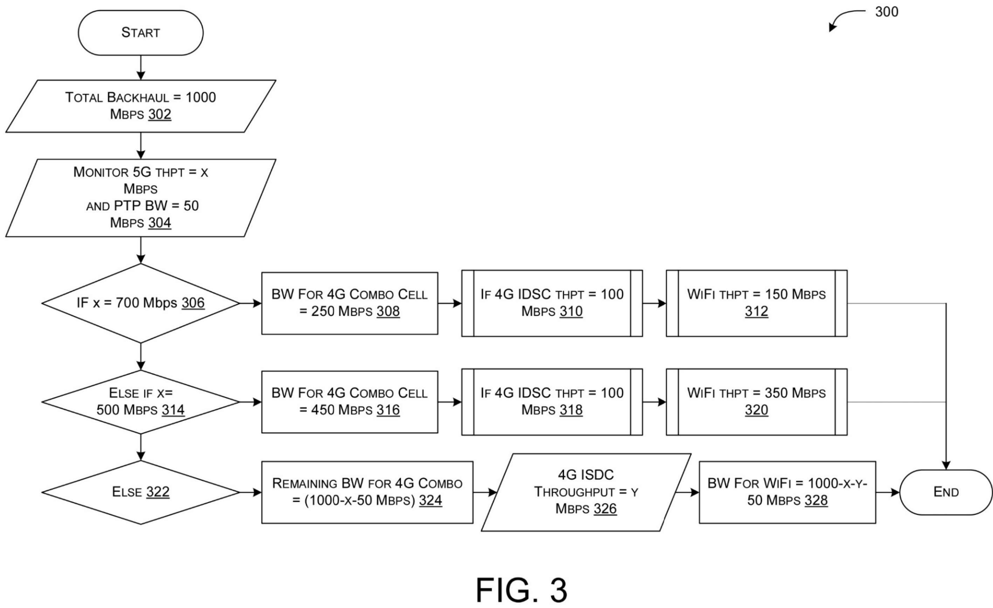

FIG. 3 illustrates an exemplary flow chart 300 of a method for decision making at the 5G IDSC considering 5G throughput as 700 Mbps and 500 Mbps, in accordance with embodiments of the present disclosure.

As depicted in FIG. 3, at step 302, the 5G IDSC (e.g., 104) may be connected to a switch (e.g., 106) with 1000 Mbps backhaul. At step 304, the 5G IDSC 104 may monitor the 5G throughput to be x Mbps and PTP bandwidth of 50 Mbps may be reserved.

Now, at step 306, the 5G IDSC 104 may determine the 5G throughput (i.e., x Mbps) to be 700 Mbps. Therefore, at step 308, the 5G IDSC 104 may determine the bandwidth for 4G combo IDSC (e.g., 102) to be (1000-700-50) Mbps, i.e., 250 Mbps. Referring to FIG. 3, at step 310, if the 4G throughput is 100 Mbps, then, at step 312, the 5G IDSC 104 may determine the Wi-Fi throughput to be 150 Mbps.

Referring to FIG. 3, at step 314, the 5G IDSC 104 may determine the 5G throughput to be 500 Mbps. Therefore, at step 316, the 5G IDSC 104 may determine the bandwidth for 4G combo IDSC 102 to be 450 Mbps. At step 318, if the 4G throughout is 100 Mbps, then at step 320, the 5G IDSC 104 may determine the Wi-Fi throughout to be 350 Mbps.

At step 322, in case of another scenario, the 5G IDSC 104 may take the decision on bandwidth requirements, based on the process followed in FIG. 2. For example, at step 324, the 5G IDSC 104 may determine the 4G combo throughput as (1000-x-50) Mbps. Further, if the 4G throughput, at step 326, is determined to be y Mbps, then at step 328, the 5G IDSC 104 may determine the Wi-Fi throughput to be (1000-x-50-y) Mbps.

It may be noted that the final Wi-Fi throughput may always depend on the actual 5G traffic on a particular cell.

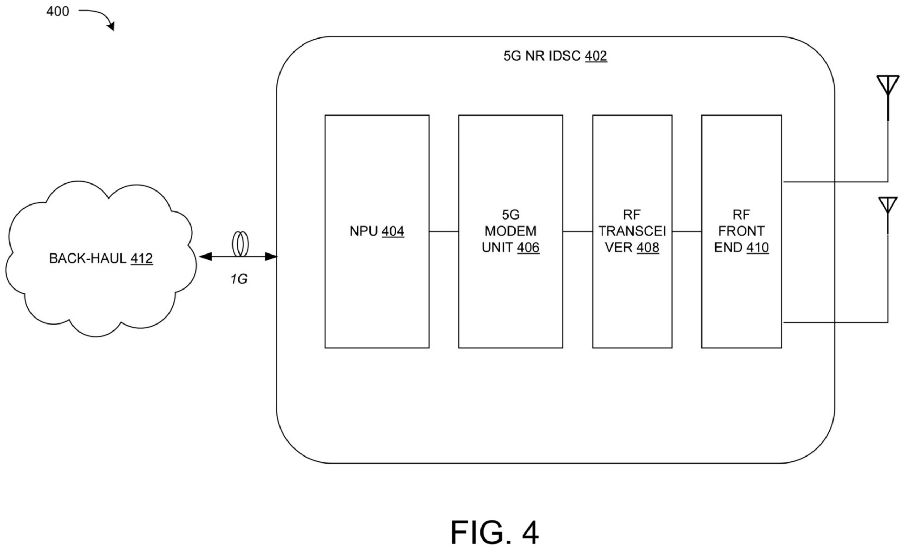

FIG. 4 illustrates an exemplary representation 400 of the 5G new radio (NR) IDSC, in accordance with embodiments of the present disclosure.

Referring to FIG. 4, the proposed 5G IDSC 402 is 2T2R NR, all in one gNodeB. The 5G IDSC 402 may support sub-6 (3.3-3.6 GHz) n78 band. In particular, the 5G IDSC 402 comprises a network processor unit 404, a 5G modem unit 406, a radio frequency (RF) transceiver 408, and an RF front end unit 410. In an embodiment, the network processor unit 404 may integrate with cores with packet processing acceleration and high-speed peripherals.

Further, the 5G model unit 406 provides 5G NR standard for sub-6 GHz. The 5G model unit 406 supports PCIe Gen 3, x2 lanes with PCIe boot for communication with the network processor unit 404. Further, the 5G model unit 406 supports I/F interface for communication with sub-6 GHz RF transceiver 408. In an embodiment, the 5G modem unit 406 may operate at 3^{rd} partnership project (3GPP) n78 band.

Furthermore, the RF transceiver 408 supports 5G NR sub-6 GHz with the 5G modem unit 406. The RF transceiver 408 communicates with the 5G modem unit 406 through an interface. Referring to FIG. 4, the RF front end unit 410 for the RF transceiver 408 may include power amplifiers, filters, circulators, switches, etc. in the RF path.

The 5G IDSC 402 has two backhaul 412 options, 1 Gbps Ethernet port and 1 Gbps optical port. For supporting the daisy chain of 4G combo IDSC, the existing 1G Ethernet port is converted as output port for backhaul 412 to the 4G combo IDSC. All 4G data, management, and synchronization PTP signals are passed from 1G optical port to 1G Ethernet port. Similarly, Wi-Fi data and control are also passed from the 1G optical port to the 1G Ethernet port through the 5G IDSC 402.

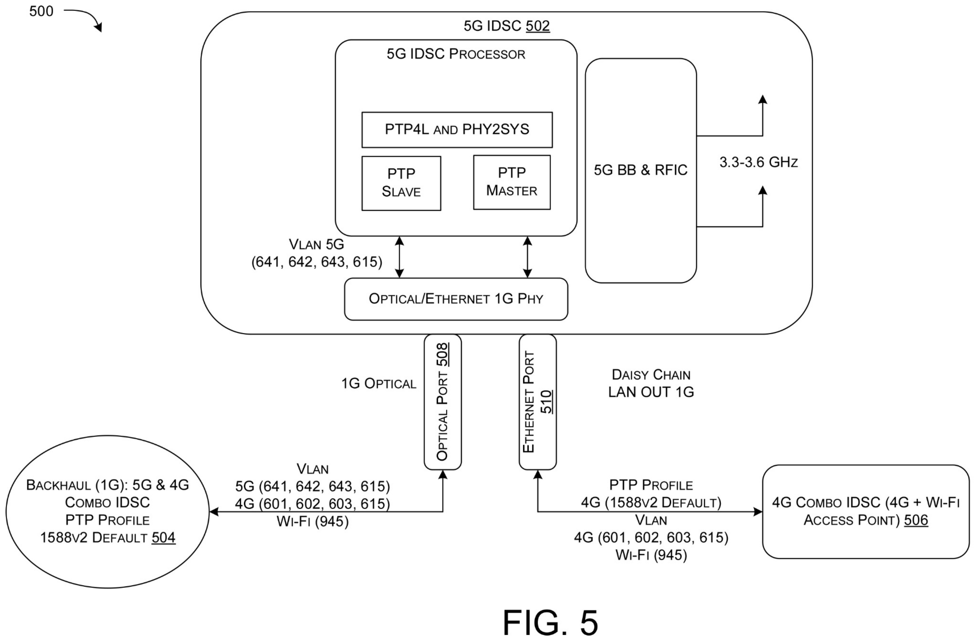

FIG. 5 illustrates an exemplary block diagram 500 of the 5G IDSC with 4G combo IDSC, in accordance with embodiments of the present disclosure.

In particular, FIG. 5 shows connectivity of 4G combo IDSC 506 with 5G IDSC 502 and backhaul 504. As shown, the backhaul 504 is connected to an optical port 508 of the 5G IDSC 502, and daisy chain output port, i.e., Ethernet port 510 from the 5G IDSC 502 is connected to the 4G combo IDSC 506. Backhaul network routers are configured to support all 5G core, 4G core, and Wi-Fi core in terms of control, data, and synchronization PTP, reachability to the 5G IDSC 502. In an embodiment, the required reachability may be done over virtual local area networks (VLANs). In an embodiment, 641, 642, and 643 VLAN identifiers (IDs) may be used for 5G core connectivity, and 601, 602, and 603 VLAN IDs may be used for 4G core connectivity. In an embodiment, VLAN 945 may be used for Wi-Fi core connectivity. However, it may be noted that any other VLAN IDs may be defined as per backhaul architecture within the scope of ongoing disclosure.

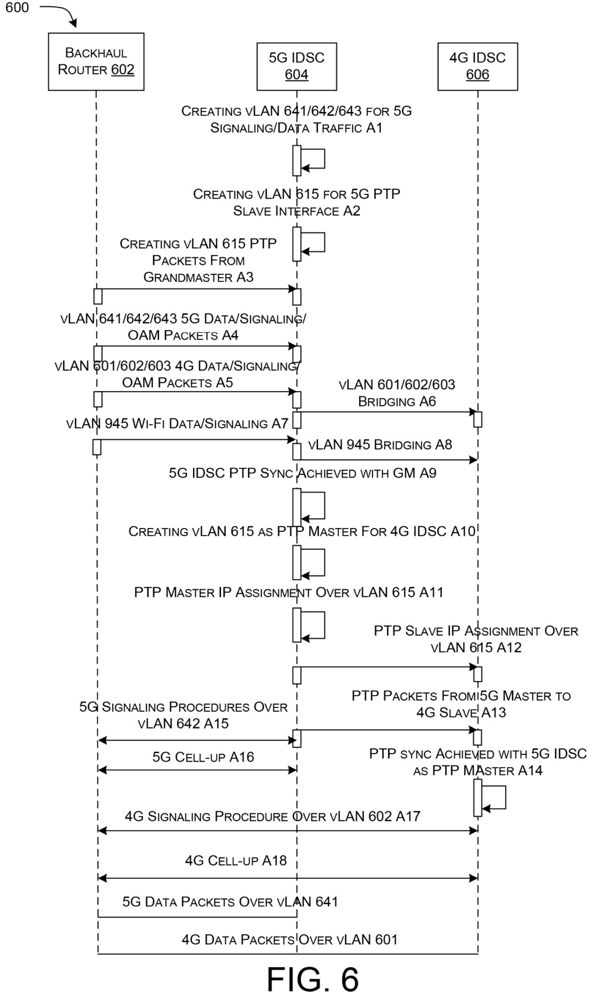

FIG. 6 illustrates an exemplary sequence diagram 600 depicting connectivity data flow, in accordance with embodiments of the present disclosure.

Referring to FIG. 6, a backhaul router 602 may be configured for different VLANs to support 5G IDSC and 4G combo connectivity. At step A1, 5G IDSC 604 may create VLAN 641, 642, and 643 for 5G signalling and data traffic. At step A2, the 5G IDSC 604 may create VLAN 615 for 5G PTP slave interface (depicted in FIG. 5).

At step A3, the backhaul router 602 may create VLAN 615 for PTP packets from a grandmaster and send to the 5G IDSC 604. The PTP grandmaster is a clock that is equipped with a built-in global navigation satellite system (GNSS) receiver and a stable oscillator. The grandmaster clock is tasked with propagating the timing signal from the GNSS or a global positioning system (GPS) to the rest of the elements in the network. Similarly, at step A4, the backhaul router 602 may create VLAN 641, 642, and 643 for 5G data/signalling/operations administration and management (OAM) packets. Further, at step A5, the backhaul router 602 may create VLAN 601, 602, and 603 for 4G data/signalling/OAM packets.

Referring to FIG. 6, at step A6, the VLAN 601, 602, and 603 are bridged at the 5G IDSC 604 to create a tunnel of 4G packets from the backhaul router 602 to 4G combo IDSC 606. At step A7, the backhaul router 602 may create VLAN 945 for Wi-Fi data/signalling. Further, at step A8, the VLAN 945 may be bridged at the 5G IDSC 604 for creating a tunnel of Wi-Fi packets from the backhaul router 602 to the 4G combo IDSC 606.

In an embodiment, VLAN 615 PTP packets may be generated from the grandmaster present behind the backhaul router 602. Accordingly, at step A9, PTP synchronization may be achieved at the 5G IDSC 604 with the grandmaster. At step A10, the 5G IDSC 604 may enable the VLAN 615 interface on daisy chain support which may act as PTP master for 4G PTP slave. Referring to FIG. 6, at step A11, the 5G IDSC 604 may configure a PTP master internet protocol (IP) address and provide to the VLAN 615 master interface. At step A12, the PTP slave IP address may be configured and provided via the VLAN 615 interface to the 4G combo IDSC 606. In an embodiment, at step 13, the 5G IDSC 604 may generate PTP packets and send towards the 4G combo IDSC 606. Accordingly, at step 14, as per PTP message flow, the PTP synchronization may be achieved at the 4G combo IDSC 606.

Referring to FIG. 6, at steps A15 and A16, 5G signalling procedures may be carried out and cell may be up and ready for 5G user equipment (UE) attach and data flow. Further, at steps A17 and A18, 4G signalling procedures may be carried out and cell may be up and ready for 4G UE attach and data flow. In an embodiment, Wi-Fi signalling procedures may be carried out and connectivity with core may be established over VLAN 945 (from steps A7 and A8). Accordingly, Wi-Fi access point in the 4G combo IDSC 606 may be up and ready, and Wi-Fi client (e.g., mobile, laptop, television, or the like) may attach and initiate data flow.

In an embodiment, the present invention discloses a method for supporting a 4G combo indoor small cell (IDSC) (606). The method comprising configuring a backhaul router (602) for a plurality of virtual local area networks (VLANs) to support a connectivity between a 5G indoor small cell (IDSC) and the 4G combo IDSC (606). The method comprising creating, by the 5G IDSC (604), a plurality of VLANs for signalling, data traffic and a 5G precision time protocol (PTP) slave interface. The method comprising creating, by the backhaul router (602), a first set of plurality of VLANs for 4G packets. The 4G packets are 4G data packets, signalling packets and operations, administration, and maintenance (OAM) packets. The method comprising bridging, at the 5G IDSC (604), the first set of plurality of VLANs to create a tunnel of the 4G packets from the backhaul router (602) to the 4G combo IDSC (606). The method comprising creating, by the backhaul router (602) a second set of the plurality of VLANs for wi-fi packets. The wi-fi packets are wi-fi data packets and signalling packets. The method comprising bridging, at the 5G IDSC (604), the second set of the plurality of VLANs for creating a tunnel of the wi-fi packets from the backhaul router (602) to the 4G combo IDSC (606). The method comprising generating, by a grandmaster of the backhaul router (602), a plurality of VLAN PTP packets to enable PTP synchronization at the 5G IDSC (604) with the grandmaster. The method comprising enabling, by the 5G IDSC (604), a VLAN interface on a daisy chain support. The VLAN interface acts as a PTP master for a 4G PTP slave.

In an embodiment, the present invention discloses a method for bandwidth allocation for an access point in a 4G combo indoor small cell (IDSC) (606) in a network. The method comprising determining a throughput of a backhaul switch connected to a 5G indoor small cell (IDSC) (604). The method comprising determining a throughput of the 5G IDSC (604). The method comprising determining a remaining bandwidth for the 4G combo IDSC (606) based on the determined throughput of the backhaul switch and the determined throughput of the 5G IDSC (604). The method comprising determining a throughput of a 4G IDSC (606). The 4G combo IDSC (606) comprising the access point and the 4G IDSC (606). The method comprising determining a precision time protocol (PTP) bandwidth associated with a PTP grandmaster attached to the network. The method comprising calculating a bandwidth for the access point in the 4G combo IDSC (606) based on the determined remaining bandwidth, the determined throughput of the 4G IDSC (606) and the determined PTP bandwidth. The method comprising allocating the calculated bandwidth to the access point in the 4G combo IDSC (606).

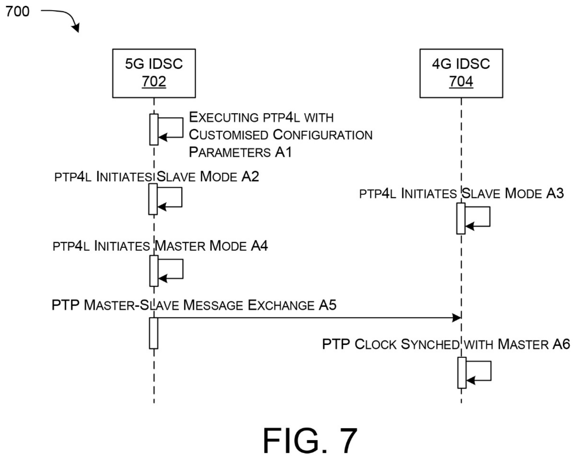

FIG. 7 illustrates an exemplary sequence diagram 700 for supporting daisy chain connectivity to 4G combo IDSC, in accordance with embodiments of the present disclosure.

Referring to FIG. 7, at step A1, a 5G IDSC 702 may execute PTP4L binary with customized configuration parameters to act as slave for a grandmaster and master for 4G combo IDSC 704. At step A2, the PTP4L may start slave behaviour by trying to sync the local 5G clock with PTP packets coming from the grandmaster. In parallel, at step A3, the 4G combo IDSC 704 may start the PTP4L binary in slave mode and wait in listening mode for the PTP packets coming from the 5G IDSC 702.

Further, at step A4, on the 5G IDSC 702, due to the customization commands set, PTP4L may start master mode for the 4G combo IDSC 704. This sets the PTP message exchange between master and slave processes resulting in establishment of PTP master-slave communication at step A5. At step A6, due to the PTP establishment (from step A5), the local clock on the 4G combo IDSC 704 enters into PTP sync state.

In an embodiment, network synchronization deals with the distribution of time and frequency across a network of clocks often spread over a wide geographical area. The goal is to align (i.e., synchronize) the time and frequency scales of all network elements clocks. In an embodiment, in 5G IDSC 702, this may be achieved using the PTP profile IEEE 1588v2.

The unique feature of 5G IDSC 702 is implementation of the PTP using PTP4L running in 5G IDSC 702 for synchronization of itself and daisy chain 4G combo IDSC 704. PTP packets may be by default marked with differentiated services code point (DSCP) 46 or DSCP 56 (both DSCP 46 and DSCP 56 packets may be marked with priority 1 in quality of service (QoS) policy). These packets may be sent with high priority from 4G combo IDSC 704 to 5G IDSC 702, and vice-versa. In this way, PTP packets may be passed in high priority queue, and it may not be affected during bandwidth choking.

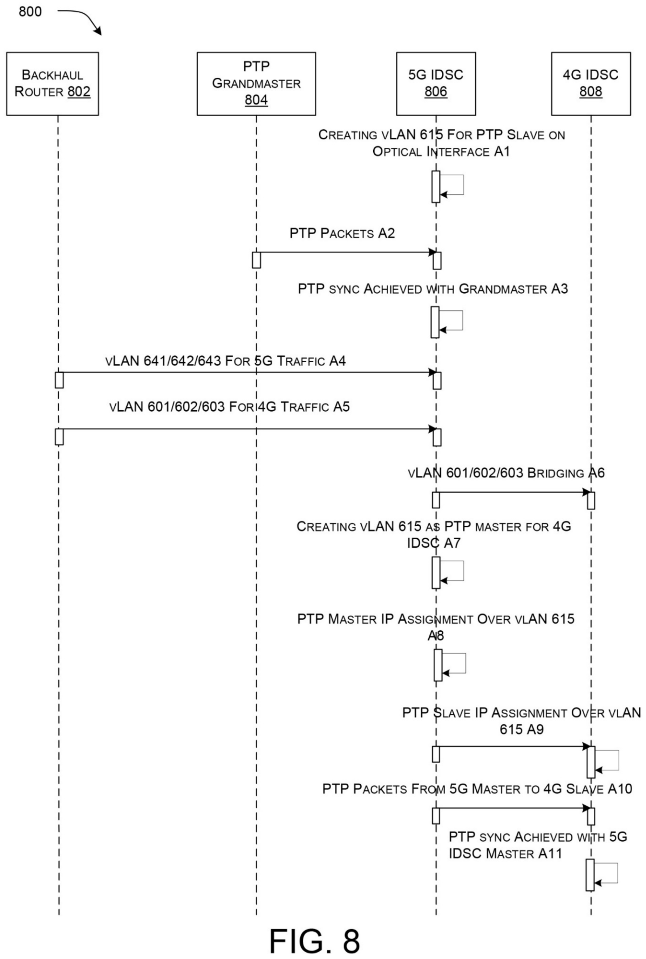

FIG. 8 illustrates an exemplary sequence diagram 800 depicting PTP flow from backhaul to 5G IDSC and from daisy chain port to 4G combo IDSC, in accordance with embodiments of the present disclosure.

In an embodiment, a PTP grandmaster 804 may be running in a network and connected to 5G IDSC 806 over a backhaul router 802. The PTP4L may be running on the 5G IDSC 806.

Referring to FIG. 8, at step A1, the 5G IDSC 806 may create VLAN 615 for PTP slave on an optical interface. At step A2, the PTP grandmaster 804 may send PTP packets to the 5G IDSC 806. Accordingly, at step A3, the 5G IDSC 806 may achieve PTP sync with the PTP grandmaster 804.

Further, the backhaul router 802, at step A4, may create VLANs 641, 642, and 643 for 5G signalling and data traffic. Similarly, at step A5, the backhaul router 802 may create VLANs 601, 602, and 603 for 4G signalling and data traffic. At step A6, the VLANs 601, 602, and 603 may be bridged at the 5G IDSC 806 to create a tunnel of 4G packets from the backhaul router 802 to 4G combo IDSC 808.

Referring to FIG. 8, at step A7, the 5G IDSC 806 may create VLAN 615 as PTP master for the 4G combo IDSC 808. At step A8, the 5G IDSC 806 may configure a PTP master IP address over VLAN 615. At step A9, the 5G IDSC 806 may configure a PTP slave IP address and provide to the 4G combo IDSC 808 over VLAN 615. Further, at step A10, the PTP packets may be provided from the master 5G IDSC 806 to the 4G combo IDSC 808 over the established interface. Accordingly, the 4G combo IDSC 808 may achieve PTP sync with the master 5G IDSC 806.

In an aspect, the present disclosure facilitates prioritization of precision time protocol (PTP) traffic from 4G to 5G, and vice versa. The present disclosure facilitates the use of existing infrastructure of 4G and Wi-Fi for both 4G and Wi-Fi, and 5G by minimizing backhaul configuration changes, and without any additional cost and time for indoor 5G rollout. In an aspect, the present disclosure can be implemented in a communication network.

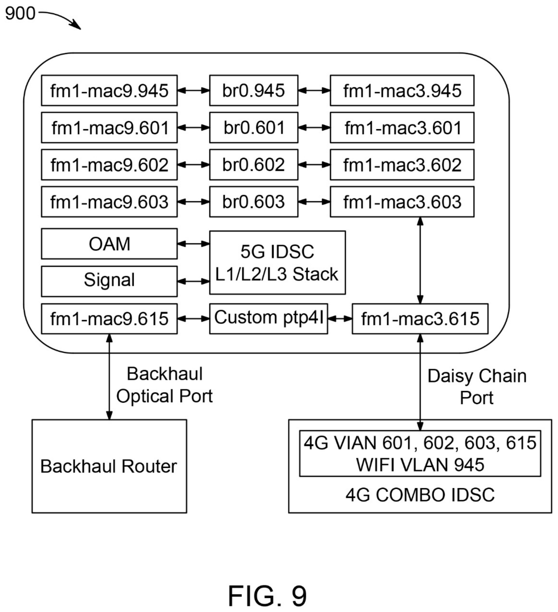

FIG. 9 illustrates an exemplary detailed architecture 900 of connectivity data flow, in accordance with embodiments of the present disclosure.

As shown in FIG. 9, the connectivity of 4G Combo IDSC with 5G IDSC and backhaul is disclosed. The backhaul is connected to an optical port of 5G IDSC and daisy chain output port from 5G IDSC (Ethernet Port) is connected to 4G Combo IDSC. The backhaul network routers are configured to support all 5G Core, 4G Core and Wi-Fi Core (control, Data and PTP synchronization) reachability to 5G IDSC.

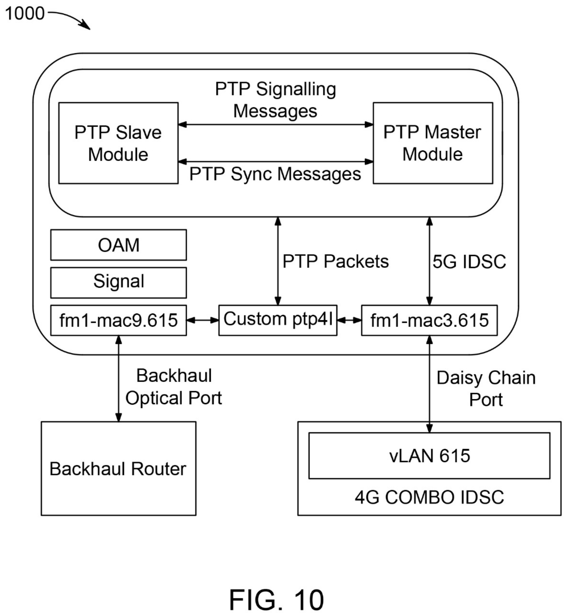

FIG. 10 illustrates an exemplary precision time protocol (PTP) flow/clock synchronization mechanism 1000, in accordance with embodiments of the present disclosure.

As shown in FIG. 10, the PTP grandmaster running in the network is connected to 5G IDSC over the backhaul port (same port used for data, signalling and OAM). The PTP4L software running in 5G IDSC decode it (in slave mode) and provide the synchronization to this 5G IDSC.

The PTP4L software acts as PTP Master and provide the synchronization packets to the 4G Combo IDSC.

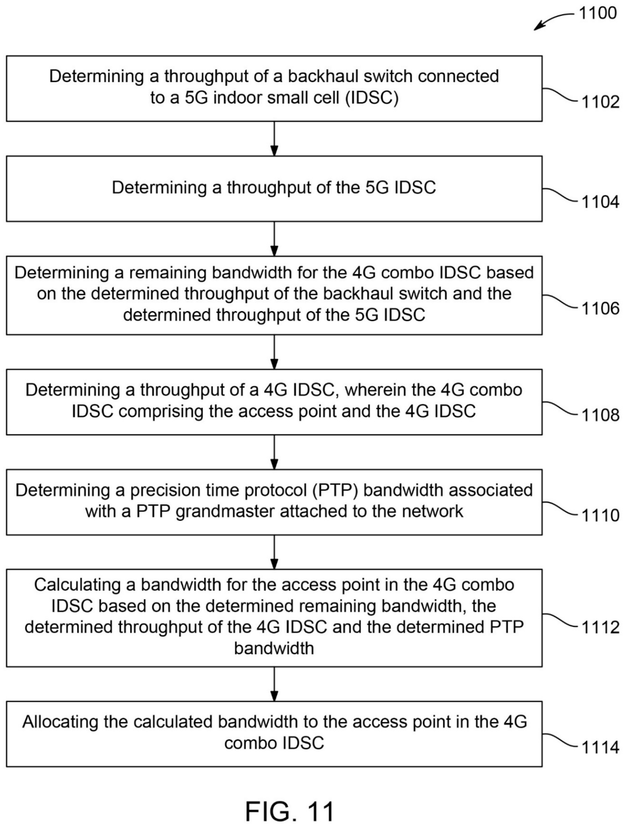

FIG. 11 illustrates an exemplary method (1100) for bandwidth allocation for an access point in the 4G combo indoor small cell (IDSC) (606) in the network, in accordance with embodiments of the present disclosure.

At step (1102), the method (1100) includes determining a throughput of a backhaul switch connected to a 5G indoor small cell (IDSC) (604). In an aspect, the backhaul switch is connected to at least one optical port of the 5G IDSC (604). The 5G IDSC (604) includes at least one daisy chain output port. The at least one daisy chain output port is connected from the 5G IDSC (604) to the 4G combo IDSC (606). The throughput of the backhaul switch (i.e., switch (106) as shown in FIG. 1) is determined.

At step (1104), the method (1100) includes determining a throughput of the 5G IDSC (604). The throughput of the 5G IDSC is determined.

At step (1106), the method (1100) includes determining a remaining bandwidth for the 4G combo IDSC (606) based on the determined throughput of the backhaul switch and the determined throughput of the 5G IDSC (604). The remaining bandwidth for the 4G combo IDSC (606) is determined by the 5G IDSC (604). The remaining bandwidth for the 4G combo IDSC (606) is a difference between the determined throughput of the backhaul switch and the determined throughput of the 5G IDSC (604) (i.e., the remaining bandwidth of 4G combo IDSC = throughput of the backhaul switch - throughput of the 5G IDSC (604)).

At step (1108), the method (1100) includes determining a throughput of the 4G IDSC (606). The 4G combo IDSC (606) comprises the access point and the 4G IDSC (606). The access point may be a Wi-Fi access point. The throughput of the 4G IDSC (606) is determined.

At step (1110), the method (1100) includes determining a precision time protocol (PTP) bandwidth associated with the PTP grandmaster attached to the network. The 5G IDSC (604) determines the PTP bandwidth associated with the PTP grandmaster attached to the network.

At step (1112), the method (1100) includes calculating bandwidth for the access point in the 4G combo IDSC (606) based on the determined remaining bandwidth, the determined throughput of the 4G IDSC (606) and the determined PTP bandwidth. The 5G IDSC (604) determines the bandwidth for the access point in the 4G combo IDSC (606). The calculated bandwidth for the access point in the 4G combo IDSC (606) is a difference between the remaining bandwidth, the determined throughput of the 4G IDSC (606) and the determined PTP bandwidth (i.e., Bandwidth of access point = the remaining bandwidth - throughput of the 4G IDSC - PTP bandwidth).

At step (1114), the method (1100) includes allocating the calculated bandwidth to the access point in the 4G combo IDSC (606). Upon calculating the bandwidth for the access point in the 4G combo IDSC (606), the calculated bandwidth is allocated to the access point in the 4G combo IDSC (606).

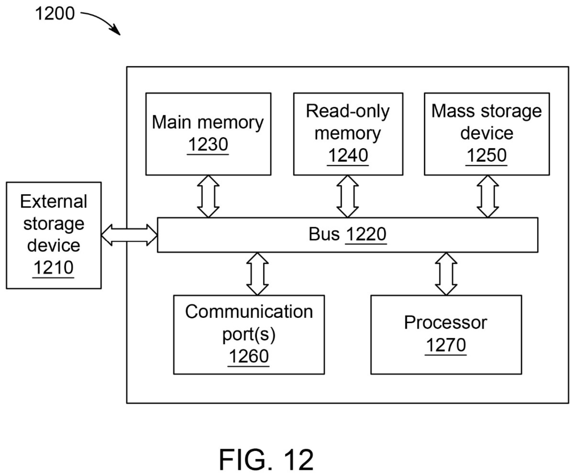

FIG. 12 illustrates an exemplary computer system (1200) in which or with which embodiments of the present disclosure may be implemented.

As shown in FIG. 12, the computer system (1200) may include an external storage device (1210), a bus (1220), a main memory (1230), a read-only memory (1240), a mass storage device (1250), communication port(s) (1260), and a processor (1270). A person skilled in the art will appreciate that the computer system (1200) may include more than one processor and communication ports. The processor (1270) may include various modules associated with embodiments of the present disclosure. The communication port(s) (1260) may be any of an RS-232 port for use with a modem-based dialup connection, a 10/100 Ethernet port, a Gigabit or 10 Gigabit port using copper or fiber, a serial port, a parallel port, or other existing or future ports. The communication port(s) (1260) may be chosen depending on a network, such a Local Area Network (LAN), Wide Area Network (WAN), or any network to which the computer system (1200) connects. The main memory (1230) may be random access memory (RAM), or any other dynamic storage device commonly known in the art. The read-only memory (1240) may be any static storage device(s) including, but not limited to, a Programmable Read Only Memory (PROM) chips for storing static information e.g., start-up or basic input/output system (BIOS) instructions for the processor (1270). The mass storage device (1250) may be any current or future mass storage solution, which may be used to store information and/or instructions.

The bus (1220) communicatively couples the processor (1270) with the other memory, storage, and communication blocks. The bus (1220) can be, e.g., a Peripheral Component Interconnect (PCI) / PCI Extended (PCI-X) bus, Small Computer System Interface (SCSI), universal serial bus (USB), or the like, for connecting expansion cards, drives, and other subsystems as well as other buses, such a front side bus (FSB), which connects the processor (1270) to the computer system (1200).

Optionally, operator and administrative interfaces, e.g., a display, keyboard, and a cursor control device, may also be coupled to the bus (1220) to support direct operator interaction with the computer system (1200). Other operator and administrative interfaces may be provided through network connections connected through the communication port(s) (1260). In no way should the aforementioned exemplary computer system (1200) limit the scope of the present disclosure.

The exemplary computer system (1200) is configured to execute a computer program product comprising a non-transitory computer-readable medium comprising instructions that, when executed by one or more processors, cause the one or more processors to perform a method for bandwidth allocation for an access point in a 4G combo indoor small cell (IDSC) in a network. The method comprises determining a throughput of a backhaul switch connected to a 5G indoor small cell (IDSC). The method comprises determining a throughput of the 5G IDSC. The method comprises determining a remaining bandwidth for the 4G combo IDSC based on the determined throughput of the backhaul switch and the determined throughput of the 5G IDSC. The method comprises determining a throughput of a 4G IDSC. The 4G combo IDSC comprises the access point and the 4G IDSC. The method comprises determining a precision time protocol (PTP) bandwidth associated with a PTP grandmaster attached to the network. The method comprises calculating a bandwidth for the access point in the 4G combo IDSC based on the determined remaining bandwidth, the determined throughput of the 4G IDSC and the determined PTP bandwidth. The method comprises allocating the calculated bandwidth to the access point in the 4G combo IDSC.

While considerable emphasis has been placed herein on the preferred embodiments, it will be appreciated that many embodiments can be made and that many changes can be made in the preferred embodiments without departing from the principles of the disclosure. These and other changes in the preferred embodiments of the disclosure will be apparent to those skilled in the art from the disclosure herein, whereby it is to be distinctly understood that the foregoing descriptive matter to be implemented merely as illustrative of the disclosure and not as limitation.

### ADVANTAGES OF THE PRESENT DISCLOSURE

The present disclosure provides daisy chain support for Fourth generation (4G) and Wireless-Fidelity (Wi-Fi) combo cell through a 5G indoor small cell (IDSC).

The present disclosure facilitates dynamic bandwidth allocation between 5G, and daisy chain connected Wi-Fi.

The present disclosure facilitates prioritization of precision time protocol (PTP) traffic from 4G to 5G, and vice versa.

The present disclosure facilitates the use of existing infrastructure of 4G and Wi-Fi for both 4G and Wi-Fi, and 5G by minimizing backhaul configuration changes, and without any additional cost and time for indoor 5G rollout.

The present disclosure enhances the network and cost optimization.

## Claims

1. A method for bandwidth allocation for an access point in a 4G combo indoor small cell (IDSC) (606) in a network, the method comprising:
determining a throughput of a backhaul switch connected to a 5G indoor small cell (IDSC) (604);
determining a throughput of the 5G IDSC (604);
determining a remaining bandwidth for the 4G combo IDSC (606) based on the determined throughput of the backhaul switch and the determined throughput of the 5G IDSC (604);
determining a throughput of a 4G IDSC (606), wherein the 4G combo IDSC (606) comprising the access point and the 4G IDSC (606);
determining a precision time protocol (PTP) bandwidth associated with a PTP grandmaster attached to the network;
calculating a bandwidth for the access point in the 4G combo IDSC (606) based on the determined remaining bandwidth, the determined throughput of the 4G IDSC (606) and the determined PTP bandwidth; and
allocating the calculated bandwidth to the access point in the 4G combo IDSC (606).

2. The method as claimed in claim 1, wherein the remaining bandwidth for the 4G combo IDSC (606) is a difference between the determined throughput of the backhaul switch and the determined throughput of the 5G IDSC (604).

3. The method as claimed in claim 1, wherein the calculated bandwidth for the access point in the 4G combo IDSC (606) is a difference between the remaining bandwidth, the determined throughput of the 4G IDSC (606) and the determined PTP bandwidth.

4. The method as claimed in claim 1, wherein the backhaul switch is connected to at least one optical port of the 5G IDSC (604).

5. The method as claimed in claim 1, wherein the 5G IDSC (604) includes at least one daisy chain output port, and wherein the at least one daisy chain output port is connected from the 5G IDSC (604) to the 4G combo IDSC (606).

6. A system for bandwidth allocation for an access point in a 4G combo indoor small cell (IDSC) (606) in a network, the system configured to:
determine a throughput of a backhaul switch connected to a 5G indoor small cell (IDSC) (604);
determine a throughput of the 5G IDSC;
determine a remaining bandwidth for the 4G combo IDSC (606) based on the determined throughput of the backhaul switch and the determined throughput of the 5G IDSC (604);
determine a throughput of a 4G IDSC (606), wherein the 4G combo IDSC (606) comprising of the access point and the 4G IDSC (606);
determine a precision time protocol (PTP) bandwidth associated with a PTP grandmaster attached to the network;
calculate a bandwidth for the access point in the 4G combo IDSC (606) based on the determined remaining bandwidth, the determined throughput of the 4G IDSC and the determined PTP bandwidth; and
allocate the calculated bandwidth to the access point in the 4G combo IDSC (606).

7. The system as claimed in claim 6, wherein the remaining bandwidth for the 4G combo IDSC (606) is a difference between the determined throughput of the backhaul switch and the determined throughput of the 5G IDSC (604).

8. The system as claimed in claim 6, wherein the calculated bandwidth for the access point in the 4G combo IDSC (606) is a difference between the remaining bandwidth, the determined throughput of the 4G IDSC (606) and the determined PTP bandwidth.

9. The system as claimed in claim 6, wherein the backhaul switch is connected to at least one optical port of the 5G IDSC (604).

10. The system as claimed in claim 6, wherein the 5G IDSC (604) includes at least one daisy chain output port connected from the 5G IDSC (604) to the 4G combo IDSC (606).

11. A network comprising a system for bandwidth allocation for an access point in a 4G combo indoor small cell (IDSC) (606), the system is configured to:
determine a throughput of a backhaul switch connected to a 5G indoor small cell (IDSC) (604);
determine a throughput of the 5G IDSC (604);
determine a remaining bandwidth for the 4G combo IDSC (606) based on the determined throughput of the backhaul switch and the determined throughput of the 5G IDSC (604);
determine a throughput of a 4G IDSC, wherein the 4G combo IDSC (606) comprising of the access point and the 4G IDSC;
determine a precision time protocol (PTP) bandwidth associated with a PTP grandmaster attached to the network;
calculate a bandwidth for the access point in the 4G combo IDSC (606) based on the determined remaining bandwidth, the determined throughput of the 4G IDSC (606) and the determined PTP bandwidth; and
allocate the calculated bandwidth to the access point in the 4G combo IDSC (606).

12. The network as claimed in claim 11, wherein the remaining bandwidth for the 4G combo IDSC (606) is a difference between the determined throughput of the backhaul switch and the determined throughput of the 5G IDSC (604).

13. The network as claimed in claim 11, wherein the calculated bandwidth for the access point in the 4G combo IDSC (606) is a difference between the remaining bandwidth, the determined throughput of the 4G IDSC and the determined PTP bandwidth.

14. The network as claimed in claim 11, wherein the backhaul switch is connected to at least one optical port of the 5G IDSC (604), wherein the 5G IDSC (604) includes at least one daisy chain output port and wherein the at least one daisy chain output port is connected from the 5G IDSC (604) to the 4G combo IDSC (606).

15. A computer program product comprising a non-transitory computer-readable medium comprising instructions that, when executed by one or more processors, cause the one or more processors to perform a method for bandwidth allocation for an access point in a 4G combo indoor small cell (IDSC) (606) in a network, the method comprising:
determining a throughput of a backhaul switch connected to a 5G indoor small cell (IDSC) (604);
determining a throughput of the 5G IDSC (604);
determining a remaining bandwidth for the 4G combo IDSC (606) based on the determined throughput of the backhaul switch and the determined throughput of the 5G IDSC (604);
determining a throughput of a 4G IDSC (606), wherein the 4G combo IDSC (606) comprising the access point and the 4G IDSC (606);
determining a precision time protocol (PTP) bandwidth associated with a PTP grandmaster attached to the network;
calculating a bandwidth for the access point in the 4G combo IDSC (606) based on the determined remaining bandwidth, the determined throughput of the 4G IDSC (606) and the determined PTP bandwidth; and
allocate the calculated bandwidth to the access point in the 4G combo IDSC (606).
